# EUROPÄISCHE PATENTSCHRIFT

(11) **EP 2 191 319 B1**
(45) Veröffentlichungstag und Bekanntmachung des Hinweises auf die Patenterteilung: **06.04.2011**
(21) Anmeldenummer: 08803757.7
(22) Anmeldetag: 05.09.2008
(51) Int. Cl.: G02B 21/24

(54) **OBJEKTIVWECHSLER UND EIN MIKROSKOP**
LENS CHANGER AND A MICROSCOPE
CHANGEUR D'OBJECTIF ET MICROSCOPE

(30) Priorität: 06.09.2007 DE 102007042260
(43) Veröffentlichungstag der Anmeldung: 02.06.2010
(73) Patentinhaber: Leica Microsystems CMS GmbH, 35578 Wetzlar (DE)
(72) Erfinder: SEIFERT, Roland, 34134 Kassel (DE)
(74) Vertreter: Schaumburg, Thoenes, Thurn, Landskron, Eckert
(86) Internationale Anmeldenummer: PCT/EP2008/061788
(87) Internationale Veröffentlichungsnummer: WO 2009/030757

(56) Entgegenhaltungen:
- JP-A- 2006 337 643
- US-A1- 2005 190 438

## Beschreibung

Die Erfindung betrifft einen Objektivwechsler für ein Mikroskop mit einer Wechseleinrichtung für mindestens zwei Objektive. Des Weiteren betrifft die vorliegende Erfindung ein Mikroskop mit einem derartigen Objektivwechsler.

Objektivwechsler der eingangs genannten Art sind aus der Praxis bekannt und existieren in unterschiedlichen Ausführungsformen. Beispielsweise ist aus der DE 100 31 720 A1 ein Objektivwechsler bekannt, bei dem einzelne Objektive aus einem Objektivvorrat entlang einer Führungsschiene in ihre Sollposition verbracht werden können. Hierzu sind in der Sollposition Anschläge zur sicheren Positionierung des Objektivs vorgesehen. Alternativ hierzu kann ein Objektivwechsel entlang eines mechanischen Kurvenelements erfolgen.

Des Weiteren ist es aus dem Stand der Technik bekannt, Objektivwechsler mit einem Revolvermechanismus zu versehen, bei dem einzelne Objektive im Wesentlichen entlang einer Kreislinie angeordnet sind, und entlang dieser Kreislinie in ihre Arbeitsposition geschwenkt werden können. Des Weiteren sind Objektivwechsler bekannt, die einen Objektivwechsel über eine Kombination nacheinander ausgeführter Bewegungen realisieren, nämlich über ein Anheben, ein Verschieben und ein nachfolgendes Absenken eines Objektivs in seine Arbeitsposition. Dabei muss vom Anwender ein Hebel gedreht und gezogen bzw. gedrückt werden.

Insbesondere bei Anwendungen im Bereich der Elektrophysiologie ist es erforderlich, dass ein Probentisch mit darauf angeordneter Probe nach seiner Positionierung nicht mehr bewegt wird. Dies liegt zum einen an der häufig vorliegenden grundsätzlichen Berührungsempfindlichkeit der zu untersuchenden Proben und zum anderen an der Tatsache, dass biologische Proben meistens einen freien Zugang zur Probe benötigen, um gezielte Manipulationen an der Probe während ihrer Untersuchung zu ermöglichen.

Aus der US 2005/0190438 A1 ist ein Mikroskop mit einem Objektivwechsler bekannt. Der Objektivwechsler ermöglicht ein Ein- und Ausschwenken von Objektiven in ihre Beobachtungsposition.

Zusammenfassend ist festzuhalten, dass die aus dem Stand der Technik bekannten Objektivwechsler zum einen sehr aufwendig und kompliziert aufgebaut sind und zum anderen keine "fix stage"- Anwendungen mit fixiertem Probentisch ermöglichen. Häufig muss bei den bekannten Objektivwechslern eine Bewegung des Probentischs erfolgen, um einen Objektivwechsel durchzuführen.

Der vorliegenden Erfindung liegt daher die Aufgabe zugrunde, einen Objektivwechsler sowie ein Mikroskop mit einem derartigen Objektivwechsler der eingangs genannten Art anzugeben, wonach ein einfacher Objektivwechsel bei geringem Raumbedarf für den Objektivwechsel mit konstruktiv einfachen Mitteln ermöglicht ist.

Erfindungsgemäß wird die voranstehende Aufgabe zum einen durch einen Objektivwechsler mit den Merkmalen des Patentanspruchs 1 gelöst. Danach ist der Objektivwechsler derart ausgestaltet und weitergebildet, dass die Objektive über die Wechseleinrichtung jeweils pendelartig in ihre Arbeitsposition nahe der Fokuslage schwenkbar sind. Die Wechseleinrichtung weist eine kulissenartige Führung mit einer angekoppelten Mimik zur Realisierung der pendelartigen Schwenkbewegung der Objektive auf.

In erfindungsgemäßer Weise ist erkannt worden, dass die voranstehende Aufgabe durch einen geeigneten Einschwenkmechanismus der Objektive in ihre Arbeitsposition auf überraschend einfache Weise gelöst wird. Im Konkreten sind die Objektive über die Wechseleinrichtung jeweils pendelartig in ihre Arbeitsposition nahe der Fokuslage schwenkbar. Durch die erfindungsgemäße pendelartige Schwenkbewegung ist zum einen eine sehr einfache Bewegungsart für die Objektive gewählt und ist zum anderen ein Objektivwechsel bei geringstmöglichem Raumbedarf realisiert. Die kulissenartige Führung ermöglicht, den Objektivwechsler besonders einfach zu konstruieren.

Folglich ist mit dem erfindungsgemäßen Objektivwechsler ein Objektivwechsler angegeben, bei dem ein einfacher Objektivwechsel bei geringem Raumbedarf für den Objektivwechsel mit konstruktiv einfachen Mitteln ermöglicht ist.

In weiter vorteilhafter Weise könnten die Objektive über die Wechseleinrichtung jeweils pendelartig aus der Arbeitsposition in eine Bereitschaftsposition herausschwenkbar sein. In diesem Fall ist ein Verschwenken des nicht genutzten Objektivs in den freien Raum, beispielsweise nach vorne oder hinten, möglich. Die Objektive könnten dabei derart an die Wechseleinrichtung angekoppelt sein, dass ihre pendelartige Schwenkbewegung in einer gemeinsamen Ebene erfolgt. Hierdurch ist ein besonders platzsparender Objektivwechsel realisiert und es verbleibt ein weiter Raumbereich zu Handhabung und Manipulation der Probe.

Zur Realisierung einer besonders effektiven pendelartigen Schwenkbewegung könnten die Objektive derart gekoppelt sein, dass ein Einschwenken des einen Objektivs das Heraus schwenken des anderen Objektivs oder der anderen Objektive bewirkt. Hierdurch ist ein besonders einfaches Wechseln der Objektive von beispielsweise einem Objektiv mit geringer Vergrößerung zu einem Objektiv mit großer Vergrößerung ermöglicht.

Hinsichtlich eines besonders sicheren Objektivwechsels, bei dem ein besonders hohes Maß an Sicherheit hinsichtlich der gewünschten Unversehrtheit einer Probe realisiert ist, könnten die Objektive über die Wechseleinrichtung beim pendelartigen Einschwenken zusätzlich absenkbar und beim pendelartigen Herausschwenken zusätzlich anhebbar sein. Im Konkreten könnte die Wechseleinrichtung derart ausgebildet sein, dass die Objektivwechselbewegung durch ein Anheben des herauszuschwenkenden Objektivs beginnt und mit einem Absenken eines eingeschwenkten Objektivs endet. Mit anderen Worten könnte hierdurch eine gekoppelte Bewegung aus einem Schwenkvorgang und einem Anhebe- bzw. Absenkvorgang realisiert sein. Eine Beeinträchtigung der Probe oder irgendwelcher Manipulatoren der Probe ist hierbei weitest möglich vermieden.

Über die Mimik könnte in weiter vorteilhafter Weise die Absenk- und Anhebebewegung der Objektive realisiert sein. Insoweit könnte eine einzige Mimik sowohl die pendelartige Schwenkbewegung als auch die Absenk- und Anhebebewegung der Objektive bereitstellen.

Im Hinblick auf einen kompakten Aufbau des Objektivwechslers könnten die Objektive an die Mimik angekoppelt sein. Weitere Bauteile wären hierbei nicht erforderlich. Eine derartige Ankopplung der Objektive an die Mimik könnte in besonders einfacher Weise über eine Verschraubung-oder einen Bajonettverschluss realisiert sein. Hierdurch ist ein einfacher Austausch auch einer größeren Anzahl von Objektiven im Rahmen der vorhandenen Mimik- bzw. Wechseleinrichtung möglich.

Bei einer konkreten einfachen Ausgestaltung könnte die kulissenartige Führung einen gekrümmten Schlitz zur Führung eines Betätigungselements der Mimik aufweisen. Hierdurch ist eine besonders einfache Bedienung und Betätigung des Objektivwechslers und damit der Wechseleinrichtung ermöglicht, nämlich lediglich durch Führung des Betätigungselements in dem Schlitz. Dabei könnte das Führen des Betätigungselements zu einem Ende des Schlitzes das Einschwenken und gegebenenfalls Absenken eines Objektivs und die Führung des Betätigungselements zum anderen Ende des Schlitzes das Einschwenken und gegebenenfalls Absenken des anderen Objektivs bewirken. Lediglich durch das Hin- und Herschwenken des Betätigungselements entlang des gekrümmten Schlitzes erfolgt somit das pendelartige Verschwenken der Objektive in ihre und aus ihrer Arbeitsposition.

In konstruktiv weiter besonders einfacher Weise könnte der Schlitz in einer Platte oder Seitenplatte oder in einem Systemträger des Objektivwechslers ausgebildet sein. Die Mimik könnte dabei zwischen zwei parallel zueinander angeordneten Platten oder Seitenplatten geschützt und sicher angeordnet sein. Die Platten oder Seitenplatten könnten im Sinne eines Rahmens relativ zueinander fixiert sein. Im Konkreten könnte hierdurch eine Anordnung aus zwei parallel zueinander angeordneten Platten oder Seitenplatten mit der dazwischen angeordneten Mimik für die Objektive realisiert sein.

Weiterhin im Hinblick auf eine besonders einfache Ausgestaltung des Objektivwechslers könnte das Betätigungselement als Achse oder Hebel ausgebildet sein. Eine derartige Achse oder ein derartiger Hebel können auf einfache Weise in den Schlitz einer Führung eingebracht und dort als Betätigungselement eingesetzt werden.

Bei einer konkreten Ausgestaltung der Wechseleinrichtung könnten die Objektive an dem Betätigungselement schwenkbar gelagert sein. Hierdurch ist eine direkte Anbringung der Objektive an dem Betätigungselement gewährleistet.

Bei einer konkreten Ausgestaltung könnten die Objektive jeweils an einem Träger der Mimik angeordnet sein und könnten die Träger an einem ihrer Enden an dem Betätigungselement schwenkbar gelagert sein. Mit anderen Worten wären in diesem Fall die Objektive über einen Träger schwenkbar an dem Betätigungselement gelagert. Die Objektive könnten dabei fest an dem Träger fixiert sein. Durch die schwenkbare Lagerung oder Anlenkung der Objektive oder der Träger an dem Betätigungselement könnte eine schwenkbare Lagerung oder Anlenkung um eine gemeinsame Achse realisiert sein. Als gemeinsame Achse könnte dabei das Betätigungselement selbst dienen, wenn es als Achse oder Hebel ausgebildet ist.

In weiter konstruktiv einfacher Weise könnten die Träger jeweils mit ihrem anderen Ende um jeweils eine verschwenkbare Achse schwenkbar an jeweils einem Hebel - Verbindungshebel - der Mimik gelagert oder angelenkt sein. Die Träger sind dabei also mit ihrem einen Ende am Betätigungselement und mit ihrem anderen Ende am Verbindungshebel schwenkbar gelagert oder angelenkt.

Die Verbindungshebel könnten wiederum an ihrem dem jeweiligen Träger abgewandten Ende um jeweils eine relativ zur Wechseleinrichtung ortsfeste Achse schwenkbar gelagert sein. Die ortsfesten Achsen könnten im Konkreten in den Platten oder Seitenplatten oder in dem Systemträger gelagert sein. Hierdurch ist ein besonders kompakter Aufbau der Wechseleinrichtung und damit des Objektivwechslers realisiert.

Die gemeinsame Achse, die verschwenkbaren Achsen und die ortsfesten Achsen könnten parallel zueinander angeordnet sein. Hierdurch ist eine besonders einfache Bewegbarkeit der Wechseleinrichtung über das Betätigungselement realisiert.

An der Wechseleinrichtung könnten grundsätzlich zwei Objektive angekoppelt sein, um einen Wechsel zwischen den beiden Objektiven zu gewährleisten. Bei einer noch komfortableren Ausgestaltung der Wechseleinrichtung könnten an der Wechseleinrichtung drei Objektive ankoppelbar sein, so dass durch ein Verschwenken des Betätigungselements jeweils eines der drei Objektive in seine Arbeitsposition schwenkbar ist. Dabei könnten eine rechte Anschlagstellung, eine Mittelstellung und eine linke Anschlagstellung jeweils mit den Arbeitspositionen der drei Objektive korrelieren.

Zur Bereitstellung von mehr als zwei oder drei Objektiven mittels der Wechseleinrichtung könnte auch eine zusätzliche Zuführeinrichtung vorgesehen sein, die einzelne Objektive mit der Wechseleinrichtung koppelt und somit ein Einschwenken des gewünschten Objektivs in seine Arbeitsposition ermöglicht.

Im Hinblick auf eine besonders sichere Anordnung eines Objektivs in seiner Arbeitsposition könnte die Wechseleinrichtung eine Justiereinrichtung für die Position mindestens einer verschwenkbaren Achse in axialer Richtung aufweisen. Mit einer derartigen Justiereinrichtung könnte somit eine Positionierung und Justierung des Objektivs in Richtung der verschwenkbaren Achse erfolgen.

In konstruktiv besonders einfacher Weise könnte die Justiereinrichtung eine federvorgespannte Ablenkplatte aufweisen, die vorzugsweise mittels einer Schraube entgegen der Federvorspannrichtung gegen die verschwenkbare Achse gedrückt werden kann. In weiter einfacher Weise könnte die Ablenkplatte in eine Seitenplatte oder Platte der Wechseleinrichtung eingelassen sein, in der die ortsfesten Achsen gelagert sind. Hierdurch ist eine besonders kompakte Ausgestaltung der Wechseleinrichtung und damit des Objektivwechslers realisiert.

Zur Realisierung einer Justierung des Objektivs in der sogenannten Z-Richtung eines Mikroskops bzw. im Hinblick auf eine Verkippung der Objekte könnte die Wechseleinrichtung eine Einstelleinrichtung zur Veränderung der Krümmung des Schlitzes aufweisen. Durch eine Veränderung der Krümmung des Schlitzes erfährt das Betätigungselement zwangsweise eine Veränderung seiner quasi Kreisbahn, die es bei seiner Betätigung bzw. Verschwenkung durchfährt. Insbesondere könnten die Endbereiche des Schlitzes hinsichtlich ihrer Krümmung veränderbar sein, so dass letztendlich eine Veränderung der Endposition des Betätigungselements und damit eine Veränderung der Endposition des Objektivs in der Arbeitsposition des Objektivs realisierbar wäre.

Die Einstelleinrichtung könnte in konkreter und einfacher Weise ein Klemmelement, vorzugsweise eine Schraube, aufweisen, mit dem ein elastisch verschwenkbarer Endbereich des Schlitzes verschwenkbar ist.

Die voranstehende Aufgabe wird des Weiteren durch ein Mikroskop mit einem Objektivwechsler der oben beschriebenen Art gelöst. Diesbezüglich wird zur Vermeidung von Wiederholungen auf die oben beschriebenen Vorteile und Ausführungsmöglichkeiten in Bezug auf den beanspruchten Objektivwechsler verwiesen.

Mit dem erfindungsgemäßen Objektivwechsler ist ein einfacher Objektivwechsel bei geringem Raumbedarf für den Objektivwechsel mit konstruktiv einfachen Mitteln ermöglicht. Dabei genügt zur Betätigung der Wechseleinrichtung letztendlich ein Umlegen des Betätigungselements. Die Objektive werden in fokussierter Position wechselbar, ohne die Probe zu berühren.

Die beanspruchte Wechseleinrichtung könnte auch als Kurbeltrieb bezeichnet werden. Das Anheben und Absenken des Objektivs und damit der Hub der Objektive von der Probe wird hierbei durch die Längenverhältnisse der Bauteile der Mimik bzw. der Wechseleinrichtung oder des Kurbeltriebs sowie durch die Kreisbahn, die durch das Betätigungselement im Schlitz durchlaufen wird, bestimmt. Dabei sind im Konkreten die Längenverhältnisse der Träger und Verbindungshebel von besonderer Bedeutung. Das Objektiv kann somit von der Probe weggehoben und in den freien Raum nach vorne oder hinten verschwenkt werden.

Die oben erwähnten Verbindungshebel könnten auch als Kurbel bezeichnet werden.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche, andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigen
Fig. 1 in einer perspektivischen schematischen Darstellung ein Ausführungsbeispiel eines erfindungsgemäßen Objektivwechslers,
Fig. 2-6 in schematischen Seitenansichten Momentaufnahmen des Objektivwechslers beim Wechsel von einem Objektiv zu einem anderen Objektiv,
Fig. 7 in einer schematischen Seitenansicht sämtliche Momentaufnahmen der Fig. 2-6 in übereinander angeordneter Form,
Fig. 8 in einer schematischen Seitenansicht eine Seitenplatte mit integrierter Justiereinrichtung und
Fig. 9 in einer schematischen und vergrößerten Seitenansicht eine der Seitenplatte aus Fig. 8 gegenüberliegend anordenbare Seitenplatte mit integrierter Einstelleinrichtung.

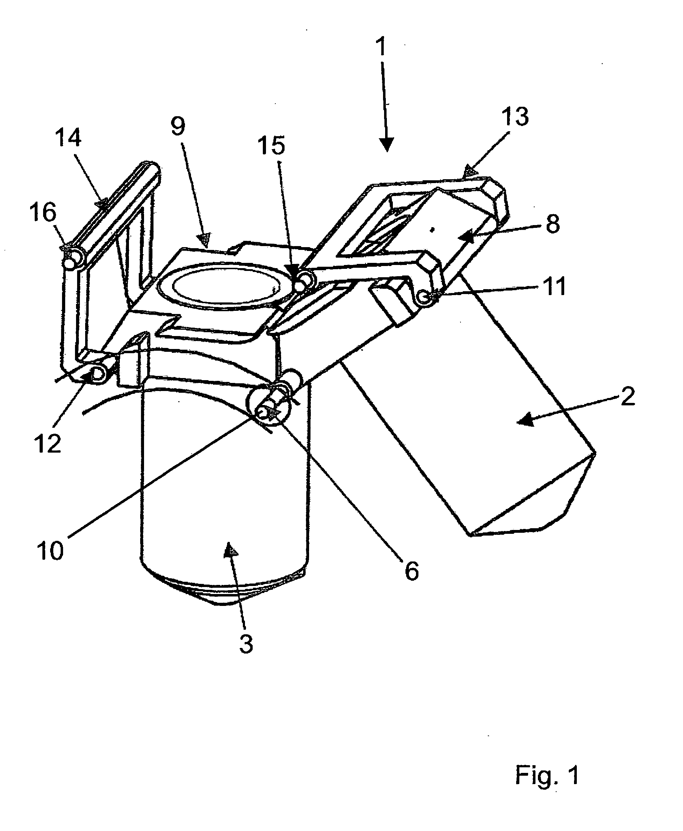

Fig. 1 zeigt in einer perspektivischen und schematischen Darstellung ein Ausführungsbeispiel eines erfindungsgemäßen Objektivwechslers für ein Mikroskop. Der Objektivwechsler weist eine Wechseleinrichtung 1 für mindestens zwei Objektive 2, 3 auf. Im Hinblick auf einen einfachen Objektivwechsel bei geringem Raumbedarf für den Objektivwechsel sind die Objektive 2, 3 über die Wechseleinrichtung 1 jeweils pendelartig in ihre Arbeitsposition nahe der Fokuslage schwenkbar.

Des Weiteren sind die Objektive 2, 3 über die Wechseleinrichtung 1 jeweils pendelartig aus der Arbeitsposition in eine Bereitschaftsposition herausschwenkbar. Bei dem in Fig. 1 gezeigten Ausführungsbeispiel befindet sich das Objektiv 2 in einer herausgeschwenkten Bereitschaftsposition und befindet sich das Objektiv 3 in seiner Arbeitsposition nahe der Fokuslage.

Die Objektive 2 und 3 sind derart an die Wechseleinrichtung 1 angekoppelt, dass ihre pendelartige Schwenkbewegung in einer gemeinsamen Ebene erfolgt. Dies gewährleistet einen geringen Raumbedarf für den Wechselvorgang. Des Weiteren sind die Objektive 2 und 3 derart gekoppelt, dass ein Einschwenken des einen Objektivs 2 oder 3 das Herausschwenken des anderen Objektivs 3 oder 2 bewirkt.

Die Objektive 2, 3 sind über die Wechseleinrichtung 1 beim pendelartigen Einschwenken zusätzlich absenkbar und beim pendelartigen Hausschwenken zusätzlich anhebbar. Dies gewährleistet einen Objektivwechsel ohne Berührung der darunterliegenden Probe.

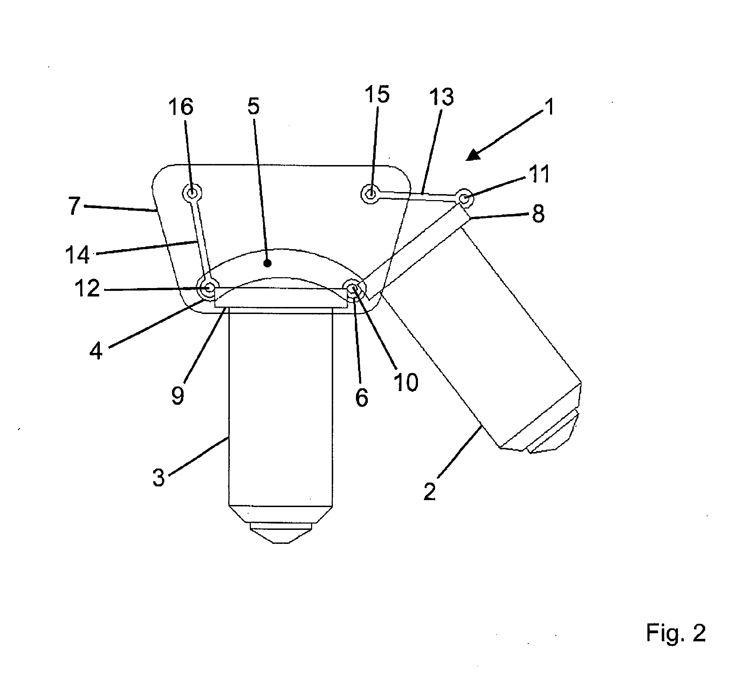

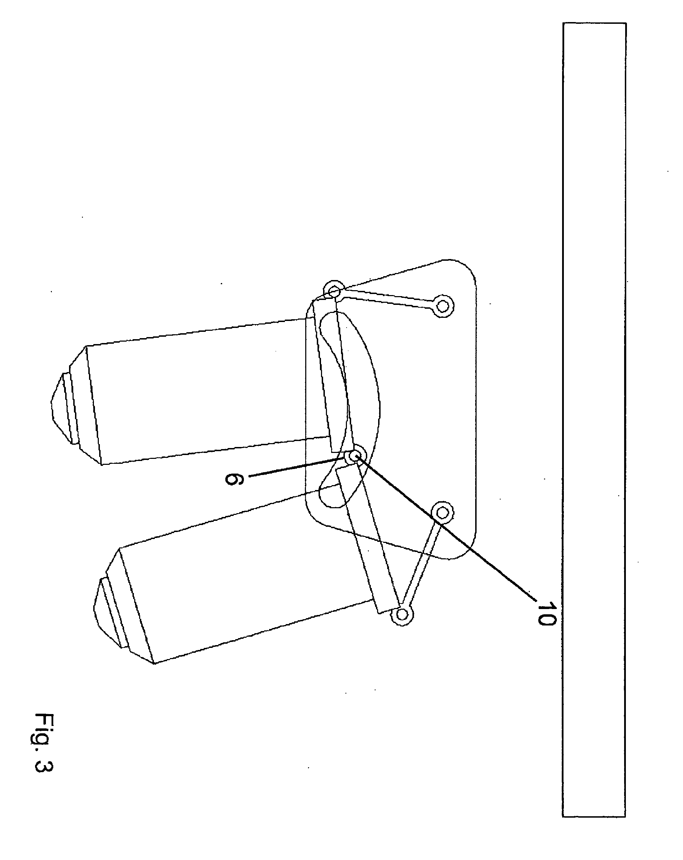

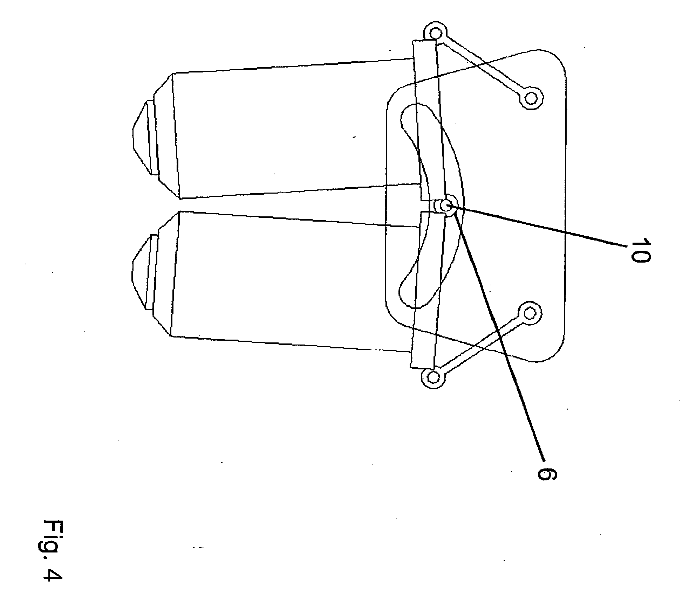

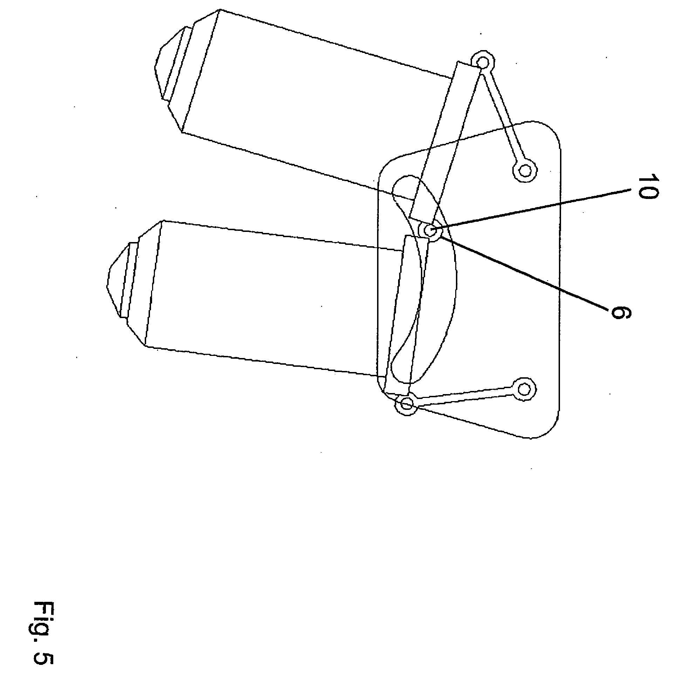

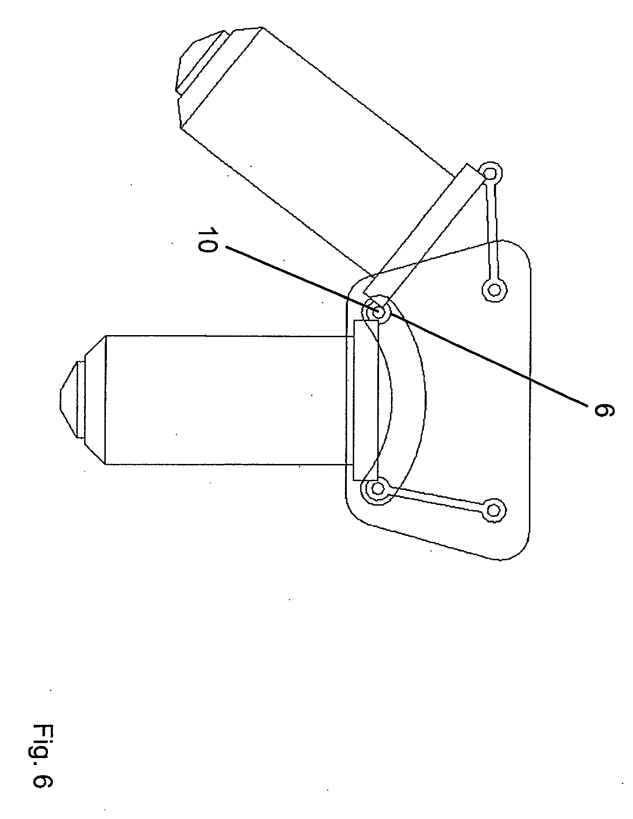

Die Fig. 2-6 zeigen in schematischen Seitenansichten Momentaufnahmen des Objektivwechslers beim Wechsel von einem Objektiv 3 zu dem anderen Objektiv 2. Dabei sind die Bewegungen der gesamten Mechanik der Wechseleinrichtung 1 gut erkennbar.

Die Wechseleinrichtung 1 weist eine kulissenartige Führung 4 mit einer angekoppelten Mimik zur Realisierung der pendelartigen Schwenkbewegung der Objektive 2 und 3 auf. Über die Mimik wird zusätzlich die Absenk- und Anhebebewegung der Objektive 2 und 3 realisiert. Die Objektive 2 und 3 sind an die Mimik angekoppelt.

Im Konkreten weist die kulissenartige Führung 4 einen gekrümmten Schlitz 5 zur Führung eines Betätigungselements 6 der Mimik auf. Das Betätigungselement 6 ist als Schwenkhebel ausgebildet. Der Schlitz 5 ist in einer Seitenplatte 7 ausgebildet.

Die Objektive 2 und 3 sind jeweils an einem Träger 8 und 9 der Mimik angeordnet, wobei die Träger 8 und 9 an einem ihrer Enden an dem Betätigungselement 6 schwenkbar gelagert sind. Im Konkreten sind die Objektive 2 und 3 über die Träger 8 und 9 an dem Betätigungselement 6 um eine gemeinsame Achse 10 schwenkbar gelagert.

Die Träger 8 und 9 sind jeweils mit ihrem anderen Ende um jeweils eine verschwenkbare Achse 11 und 12 schwenkbar an jeweils einem Hebel - Verbindungshebel 13 und 14 - der Mimik gelagert oder angelenkt. Die Verbindungshebel 13 und 14 wiederum sind an ihrem dem jeweiligen Träger 8, 9 abgewandten Ende um jeweils eine relativ zur Wechseleinrichtung 1 ortsfeste Achse 15 bzw. 16 schwenkbar gelagert. Aufgrund der schwenkbaren Lagerung der Träger 8 und 9 über die Verbindungshebel 13 und 14 wird die pendelartige Schwenkbewegung der Objektive 2 und 3 realisiert. Dabei sind die gemeinsame Achse 10, die verschwenkbaren Achsen 11 und 12 und die ortsfesten Achsen 15 und 16 parallel zueinander angeordnet. Während der pendelartigen Schwenkbewegung werden diese Achsen 10 und 11 und 12 relativ zu den ortsfesten Achsen 15 und 16 lediglich verschoben.

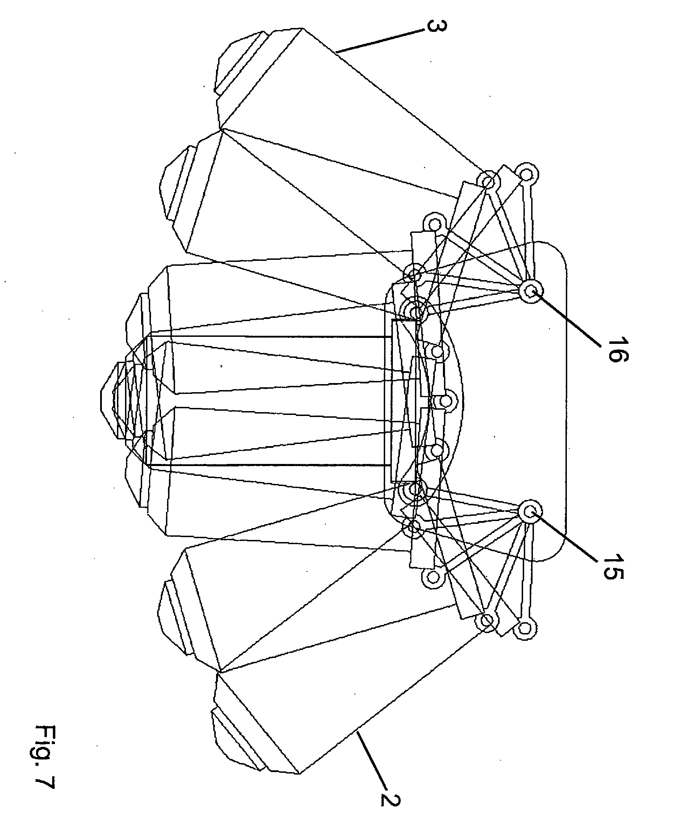

Fig. 7 zeigt in einer schematischen Seitenansicht sämtliche Momentaufnahmen der Fig. 2-6 übereinander angeordnet. Dabei ist eine komplette Schwenkbewegung zum Wechsel der Objektive 2 und 3 erkennbar.

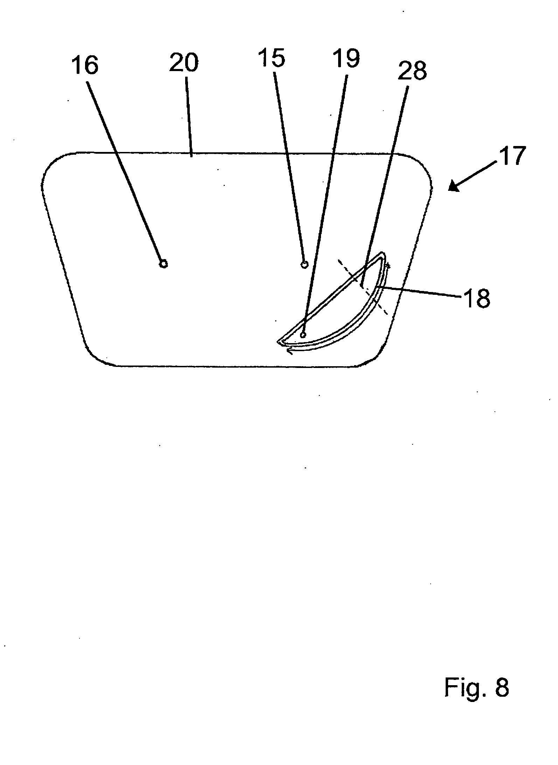

Fig. 8 zeigt in einer schematischen Seitenansicht eine Seitenplatte 20, in der die ortsfesten Achsen 15 und 16 gelagert sind. Die Seitenplatte 20 weist eine integrierte Justiereinrichtung 17 für die Position mindestens einer verschwenkbaren Achse 11 oder 12 in axialer Richtung auf. Der Einfachheit halber ist in der Darstellung lediglich eine Justiereinrichtung 17 gezeigt, jedoch kann auch eine weitere Justiereinrichtung 17 für die andere verschwenkbare Achse 11 oder 12 in die Seitenplatte 20 integriert sein.

Die Justiereinrichtung 17 weist eine federvorgespannte Ablenkplatte 18 auf, die vorzugsweise mittels einer Schraube 19 entgegen der Federvorspannrichtung gegen die verschwenkbare Achse 11 oder 12 gedrückt werden kann. Durch das Drücken der Ablenkplatte 18 gegen die Achse 11 oder 12 kann diese in axialer Richtung verschoben werden, wodurch sich eine Justierung des zugehörigen Objektivs relativ zur optischen Achse eines Mikroskops ergibt. Die Ablenkplatte 18 ist in die Seitenplatte 20 eingelassen. Die Seitenplatte 20 ist der in den Fig. 2-7 gezeigten Seitenplatte 7 gegenüberliegend angeordnet, wobei zwischen den Seitenplatten 7 und 20 die Mechanik der Wechseleinrichtung 1 für die Objektive 2 und 3 angeordnet sind.

Die zu justierende verschwenkbare Achse 11 oder 12 bewegt sich während der pendelartigen Schwenkbewegung der Wechseleinrichtung 1 entlang der Ablenkplatte 18, wie dies durch den Doppelpfeil in Fig. 8 angedeutet ist. Insoweit wirkt die durch die Ablenkplatte 18 ausgeübte Druckwirkung lediglich im unteren Bereich der Schwenkbewegung der verschwenkbaren Achse 11 oder 12 und damit lediglich bei im Wesentlichen in der Arbeitsposition angeordnetem Objektiv 2 oder 3. Die gestrichelte Linie 28 deutet die Schwenkachse an, um die die Ablenkplatte 18 geringfügig verschwenkbar ist, um gegen die Achse 11 oder 12 gedrückt werden zu können.

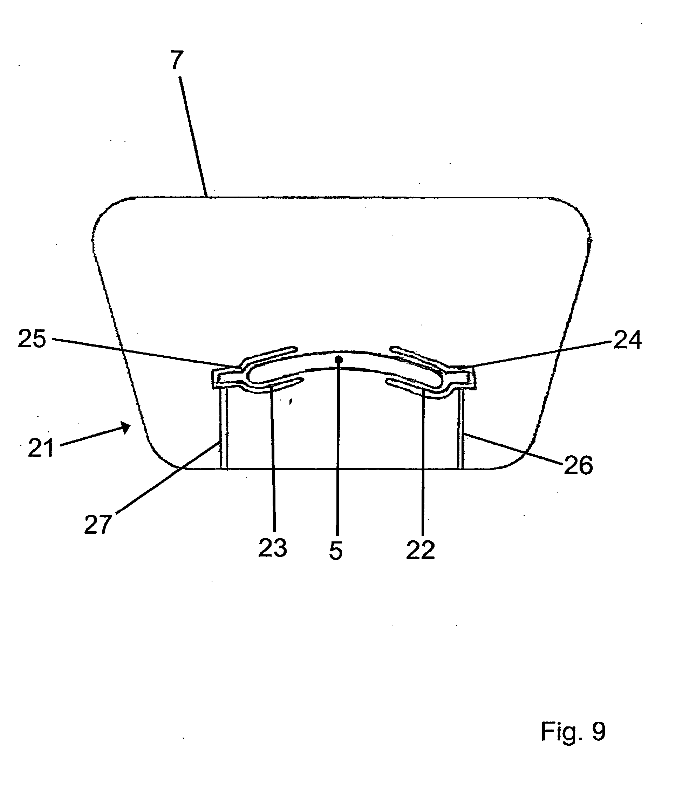

Fig. 9 zeigt in einer schematischen Seitenansicht eine der Seitenplatte 20 aus Fig. 8 gegenüberliegende Seitenplatte 7 mit integrierter Einstelleinrichtung 21 zur Veränderung der Krümmung des Schlitzes 5. Bei dem in Fig. 9 gezeigten Ausführungsbeispiel sind die Endbereiche 22 und 23 des Schlitzes 5 geringfügig bewegbar oder verbiegbar ausgebildet. Dies wird durch durchgehende Aussparungen 24 und 25 oder Durchgänge in der Seitenplatte 7 erreicht. Insoweit sind die Endbereiche 22 und 23 in der Seitenplatte 7 quasi freigelegt ausgebildet. Zur Bewegung bzw. Einstellung der Endbereich 22 und 23 weist die Seitenplatte 7 Gewinde 26 und 27 auf, in die jeweils eine Schraube eingebracht werden kann. Diese Schrauben können gegen die Enden der freigelegten Endbereiche 22 und 23 geschraubt werden, so dass diese Endbereiche 22 und 23 in Schraubrichtung verbogen oder verschwenkt werden können. Dies verändert die Form des Schlitzes 5 und damit die Führung für ein Betätigungselement 6 während der pendelartigen Wechselbewegung für die Objektive 2 und 3. Insoweit ist eine Einstellung der Arbeitsposition der Objektive 2 und 3 in Z-Richtung bzw. eine Verkippung der Objektive 2 und 3 ermöglicht.

Hinsichtlich weiterer vorteilhafter Ausgestaltungen und Weiterbildungen der erfindungsgemäßen Lehre wird zur Vermeidung von Wiederholungen einerseits auf den allgemeinen Teil der Beschreibung und andererseits auf die beigefügten Patentansprüche verwiesen.

Abschließend sei ganz besonders hervorgehoben, dass die zuvor rein willkürlich gewählten Ausführungsbeispiele lediglich zur Erörterung der erfindungsgemäßen Lehre dienen, diese jedoch nicht auf diese Ausführungsbeispiele einschränken.

### Bezugszeichenliste

- 1: Wechseleinrichtung
- 2: Objektiv
- 3: Objektiv
- 4: Führung
- 5: Schlitz
- 6: Betätigungselement
- 7: Seitenplatte
- 8: Träger
- 9: Träger
- 10: gemeinsame Achse
- 11: verschwenkbare Achse
- 12: verschwenkbare Achse
- 13: Verbindungshebel
- 14: Verbindungshebel
- 15: ortsfeste Achse
- 16: ortsfeste Achse
- 17: Justiereinrichtung
- 18: Ablenkplatte
- 19: Schraube
- 20: Seitenplatte
- 21: Einstelleinrichtung
- 22: Endbereich
- 23: Endbereich
- 24: Aussparung
- 25: Aussparung
- 26: Gewinde
- 27: Gewinde
- 28: gestrichelte Linie

## Patentansprüche

1. Objektivwechsler für ein Mikroskop mit einer Wechseleinrichtung (1) für mindestens zwei Objektive (2, 3), die über die Wechseleinrichtung (1) jeweils pendelartig in ihre Arbeitsposition nahe der Fokuslage schwenkbar sind **dadurch gekennzeichnet, dass** die Wechseleinrichtung (1) eine kulissenartige Führung (4) mit einer angekoppelten Mimik zur Realisierung der pendelartigen Schwenkbewegung der Objektive (2, 3) aufweist.

2. Objektivwechsler nach Anspruch 1, **dadurch gekennzeichnet, dass** die Objektive (2, 3) über die Wechseleinrichtung (1) jeweils pendelartig aus der Arbeitsposition in eine Bereitschaftsposition herausschwenkbar sind.

3. Objektivwechsler nach Anspruch 1 oder 2, **dadurch gekennzeichnet, dass** die Objektive (2, 3) derart an die Wechseleinrichtung (1) angekoppelt sind, dass ihre pendelartige Schwenkbewegung in einer gemeinsamen Ebene erfolgt.

4. Objektivwechsler nach einem der Ansprüche 1 bis 3, **dadurch gekennzeichnet, dass** die Objektive (2, 3) derart gekoppelt sind, dass ein Einschwenken des einen Objektivs (2 oder 3) das Herausschwenken des anderen Objektivs (3 oder 2) oder der anderen Objektive bewirkt.

5. Objektivwechsler nach einem der Ansprüche 1 bis 4, **dadurch gekennzeichnet, dass** die Objektive (2, 3) über die Wechseleinrichtung (1) beim pendelartigen Einschwenken zusätzlich absenkbar und beim pendelartigen Herausschwenken zusätzlich anhebbar sind.

6. Objektivwechsler nach Anspruch 5, **dadurch gekennzeichnet, dass** über die Mimik zusätzlich die Absenk- und Anhebebewegung der Objektive (2, 3) realisiert ist.

7. Objektivwechsler nach Anspruch oder 6, **dadurch gekennzeichnet, dass** die Objektive (2, 3) an die Mimik angekoppelt sind.

8. Objektivwechsler nach einem der Ansprüche 1 bis 7, **dadurch gekennzeichnet, dass** an der Wechseleinrichtung (1) drei Objektive (2, 3) ankoppelbar sind.

9. Objektivwechsler nach Anspruch 8, **dadurch gekennzeichnet, dass** die Wechseleinrichtung (1) eine Justiereinrichtung (17) für die Position mindestens einer verschwenkbaren Achse (11, 12) in axialer Richtung aufweist.

10. Objektivwechsler nach Anspruch 9, **dadurch gekennzeichnet, dass** die Justiereinrichtung (17) eine federvorgespannte Ablenkplatte (18) aufweist, die vorzugsweise mittels einer Schraube (19) entgegen der Federvorspannrichtung gegen die verschwenkbare Achse (11, 12) gedrückt werden kann.

11. Objektivwechsler nach Anspruch 10, **dadurch gekennzeichnet, dass** die Ablenkplatte (18) in eine Seitenplatte (20) der Wechseleinrichtung (1) eingelassen ist, in der die ortsfesten Achsen (15, 16) gelagert sind.

12. Objektivwechsler nach einem der Ansprüche 8 bis 11, **dadurch gekennzeichnet, dass** die Wechseleinrichtung (1) eine Einstelleinrichtung (21) zur Veränderung der Krümmung des Schlitzes (5) aufweist.

13. Objektivwechsler für ein Mikroskop mit einer Wechseleinrichtung (1) für zwei Objektive (2, 3), wobei die Objektive (2, 3) über die Wechseleinrichtung (1) jeweils pendelartig in ihre Arbeitsposition nahe der Fokuslage schwenkbar und aus der Arbeitsposition in eine Bereitschaftsposition herausschwenkbar sind, **dadurch gekennzeichnet, dass** die Objektive (2, 3) derart an die Wechseleinrichtung (1) angekoppelt sind, dass ihre pendelartige Schwenkbewegung in einer gemeinsamen Ebene erfolgt, dass die Wechseleinrichtung (1) eine kulissenartige Führung (4) mit einer angekoppelten Mimik zur Realisierung der pendelartigen Schwenkbewegung der Objektive (2, 3) aufweist, dass die kulissenartige Führung (4) einen gekrümmten Schlitz (5) zur Führung eines Betätigungselements (6) der Mimik aufweist, dass das Betätigungselement (6) als Achse oder Hebel ausgebildet ist, dass die Objektive (2, 3) jeweils an einem Träger (8, 9) der Mimik angeordnet sind, dass die Träger (8, 9) an einem ihrer Enden an dem Betätigungselement (6) schwenkbar gelagert sind, dass die Träger (8, 9) an dem Betätigungselement (6) um eine gemeinsame Achse (10) schwenkbar gelagert sind, dass die Träger (8, 9) jeweils mit ihrem anderen Ende um jeweils eine verschwenkbare Achse (11, 12) schwenkbar an jeweils einem Hebel - Verbindungshebel (13, 14) der Mimik gelagert oder angelenkt sind, dass die Verbindungshebel (13, 14) an ihrem dem jeweiligen Träger (8, 9) abgewandten Ende um jeweils eine relativ zur Wechseleinrichtung (1) ortsfeste Achse (15, 16) schwenkbar gelagert sind und dass die gemeinsame Achse (10), die verschwenkbaren Achsen (11, 12) und die ortsfesten Achsen (15, 16) parallel zueinander angeordnet sind.

14. Mikroskop mit einem Objektivwechsler nach einem der Ansprüche 1 bis 13.

## Claims

1. An objective changer for a microscope having a changing device (1) for at least two objectives (2, 3), each of which can be pendulously swung into its operating position near the focal position via the changing device (1), **characterized in that** the changing device (1) has a link-type guide device (4) with a mechanism coupled thereto for implementing the pendulous swinging motion of the objectives (2, 3).

2. The objective changer according to claim 1, **characterized in that** each of the objectives (2, 3) can be pendulously swung from the operating position into a standby position via the changing device (1).

3. The objective changer according to claim 1 or 2, **characterized in that** the objectives (2, 3) are coupled to the changing device (1) such that their pendulous swinging motion is performed in one common plane.

4. The objective changer according to one of the claims 1 to 3, **characterized in that** the objectives (2, 3) are coupled such that a swinging-in of the one objective (2 or 3) causes the swinging-out of the other objective (3 or 2) or the other objectives.

5. The objective changer according to one of the claims 1 to 4, **characterized in that** the objectives (2, 3) can additionally be lowered during the pendulous swinging-in motion and can additionally be lifted during the pendulous swinging-out motion via the changing device (1).

6. The objective changer according to claim 5, **characterized in that** via the mechanism in addition the lowering and lifting motion of the objectives (2, 3) is implemented.

7. The objective changer according to claim 6, **characterized in that** the objectives (2, 3) are coupled to the mechanism.

8. The objective changer according to one of the claims 1 to 7, **characterized in that** three objectives (2, 3) can be coupled to the changing device (1).

9. The objective changer according to claim 8, **characterized in that** the changing device (1) has an adjusting device (17) for adjusting the position of at least one pivotable axle (11, 12) in axial direction.

10. The objective changer according to claim 9, **characterized in that** the adjusting device (17) has a spring-biased deflection plate (18) which can be pressed against the pivotable axle (11, 12) preferably by means of a screw (19) against the spring biasing direction.

11. The objective changer according to claim 10, **characterized in that** the deflection plate (18) is embedded in a side plate (20) of the changing device (1) in which the stationary axles (15, 16) are mounted.

12. The objective changer according to one of the claims 8 to 11, **characterized in that** the changing device (1) has a setting device (21) for changing the curvature of the slot (5).

13. An objective changer for a microscope having a changing device (1) for two objectives (2, 3), wherein each of the objectives (2, 3) can be pendulously swung into its operating position near the focal position and can be pendulously swung from the operating position into a standby position via the changing device (1), **characterized in that** the objectives (2, 3) are coupled to the changing device (1) such that their pendulous swinging motion is performed in one common plane, **in that** the changing device (1) has a link-type guide device (4) with a mechanism coupled thereto for implementing the pendulous swinging motion of the objectives (2, 3), **in that** the link-type guide device (4) has a curved slot (5) for guiding an actuating element (6) of the mechanism, **in that** the actuating element (6) is formed as an axle or lever, **in that** each of the objectives (2, 3) is arranged on a holder (8, 9) of the mechanism, **in that** the holders (8, 9) are pivoted with one of their ends on the actuating element (6), **in that** the holders (8, 9) are mounted on the actuating element (6) so as to be pivoted about one common axle (10), **in that** each of the holders (8, 9) is mounted or articulated with its respective other end on one lever - connecting levers (13, 14) of the mechanism such that it can be pivoted about one pivotable axle (11, 12) each, **in that** the connecting levers (13, 14) with their ends facing away from the respective holder (8, 9) are pivoted about one axle (15, 16) each, which axle is stationary relative to the changing device (1), and **in that** the common axle (10), the pivotable axles (11, 12) and the stationary axles (15, 16) are arranged in parallel with respect to one another.

14. A microscope having an objective changer according to one of the claims 1 to 13.

## Revendications

1. Changeur d'objectif pour un microscope, comportant un dispositif de changement (1) pour au moins deux objectifs (2, 3) qui, par l'intermédiaire du dispositif de changement (1), sont aptes à pivoter chacun de manière pendulaire vers l'intérieur vers leur position de travail à proximité de la position focale, **caractérisé en ce que** le dispositif de changement (1) comporte un guidage de type coulisse (4) auquel est couplée une mimique pour la réalisation du mouvement de pivotement pendulaire des objectifs (2, 3).

2. Changeur d'objectif selon la revendication 1, **caractérisé en ce que** les objectifs (2, 3) peuvent pivoter, par l'intermédiaire du dispositif de changement (1), chacun de manière pendulaire vers l'extérieur hors de la position de travail dans une position d'attente.

3. Changeur d'objectif selon la revendication 1 ou 2, **caractérisé en ce que** les objectifs (2, 3) sont couplés au dispositif de changement (1), de telle sorte que leur mouvement de pivotement pendulaire se produit dans un plan commun.

4. Changeur d'objectif selon l'une quelconque des revendications 1 à 3 **caractérisé en ce que** les objectifs (2, 3) sont couplés de telle sorte qu'un pivotement vers l'intérieur de l'un des objectifs (2 ou 3) induit le pivotement vers l'extérieur de l'autre objectif (3 ou 2) ou des autres objectifs.

5. Changeur d'objectif selon l'une quelconque des revendications 1 à 4, **caractérisé en ce que**, par l'intermédiaire du dispositif de changement (1), les objectifs (2, 3) peuvent, en plus, être abaissés pendant leur pivotement pendulaire vers l'intérieur et peuvent, en plus, être relevés pendant leur pivotement pendulaire vers l'extérieur.

6. Changeur d'objectif selon la revendication 5, **caractérisé en ce que**, de surcroît, le mouvement d'abaissement et le mouvement de levage des objectifs (2, 3) sont réalisés par l'intermédiaire de la mimique.

7. Changeur d'objectif selon la revendication ou 6, **caractérisé en ce que** les objectifs (2, 3) sont couplés à la mimique.

8. Changeur d'objectif selon l'une quelconque des revendications 1 à 7, **caractérisé en ce que** trois objectifs (2, 3) peuvent être couplés au dispositif de changement (1).

9. Changeur d'objectif selon la revendication 8, **caractérisé en ce que** le dispositif de changement (1) comporte un dispositif d'ajustement (17) pour positionner au moins un axe pivotant (11, 12) dans la direction axiale.

10. Changeur d'objectif selon la revendication 9, **caractérisé en ce que** le dispositif d'ajustement (17) comporte un déflecteur (18) précontraint par ressort, qui peut être poussé, de préférence au moyen d'une vis (19), dans le sens opposé à la direction de précontrainte du ressort, contre l'axe pivotant (11, 12).

11. Changeur d'objectif selon la revendication 10, **caractérisé en ce que** le déflecteur (18) est inséré dans une plaque latérale (20) du dispositif de changement (1), dans laquelle sont logés les axes fixes (15, 16).

12. Changeur d'objectif selon l'une quelconque des revendications 8 à 11, **caractérisé en ce que** le dispositif de changement (1) comporte un dispositif de réglage (21) pour modifier la courbure de la fente (5).

13. Changeur d'objectif pour un microscope, comportant un dispositif de changement (1) pour deux objectifs (2, 3), lesdits objectifs (2, 3) étant aptes à pivoter chacun de manière pendulaire, par l'intermédiaire du dispositif de changement (1), vers leur position de travail à proximité de la position focale et hors de la position de travail vers une position d'attente, **caractérisé en ce que** les objectifs (2, 3) sont couplés au dispositif de changement (1), de telle sorte que leur mouvement de pivotement pendulaire se produit dans un plan commun, **en ce que** le dispositif de changement (1) comporte un guidage de type coulisse (4) auquel est couplée une mimique pour la réalisation du mouvement de pivotement pendulaire des objectifs (2, 3), **en ce que** le guidage de type coulisse (4) comporte un fente (5) courbe pour le guidage d'un élément de manoeuvre (6) de la mimique, **en ce que** l'élément de manoeuvre (6) est réalisé sous la forme d'un axe ou d'un levier, **en ce que** les objectifs (2, 3) sont disposés chacun sur un support (8, 9) de la mimique, **en ce que** les supports (8, 9) sont montés pivotants sur l'élément de manoeuvre (6) au niveau de l'une de leurs extrémités, **en ce que** les supports (8, 9) sont montés sur l'élément de manoeuvre (6) de manière à pouvoir pivoter autour d'un axe commun (10), **en ce que** les supports (8, 9) sont montés ou articulés chacun avec son autre extrémité sur un levier - levier de liaison (13, 14) de la mimique, de manière à pouvoir pivoter chacun autour d'un axe pivotant (11, 12), **en ce que** les leviers de liaison (13, 14), au niveau de leur extrémité détournée du support (8, 9) respectif, sont montés de manière à pouvoir pivoter chacun autour d'un axe fixe (15, 16) par rapport au dispositif de changement (1), et **en ce que** l'axe commun (10), les axes pivotants (11, 12) et les axes fixes (15, 16) sont disposés parallèlement entre eux.

14. Microscope comportant un changeur d'objectif selon l'une quelconque des revendications 1 à 13.
